# EUROPEAN PATENT SPECIFICATION

(11) **EP 1 172 247 B1**
(45) Date of publication and mention of the grant of the patent: **02.08.2006**
(21) Application number: 01202490.7
(22) Date of filing: 29.06.2001
(51) Int. Cl.: B60K 17/28, B60K 17/08

(54) **High vehicle speed shift device**
Schaltvorrichtung für hohe Fahrzeuggeschwindigkeiten
Dispositif de commutation pour grande vitesse de véhicule

(30) Priority: 11.07.2000 IT BO200416
(43) Date of publication of application: 16.01.2002
(73) Proprietor: CNH Italia S.p.A., 41100 Modena (IT)
(72) Inventor: Brancolini, Emiliano, 41030 (Sorbara) Modena (IT)
(74) Representative: Vandenbroucke, Alberic

(56) References cited:
- EP-A- 0 842 804
- GB-A- 1 004 834
- US-A- 3 796 111
- US-A- 4 961 721

## Description

The present invention relates to a vehicle comprising a high vehicle speed shift device.

Currently marketed agricultural tractors are normally designed for a maximum speed of about 40 km/h, which is not normally exceeded to avoid impairing the on-road stability of the tractor, especially when an implement is attached.

There are times, however, that a higher speed is desirable, particularly in the case of wheeled tractors travelling frequently from one location to another along asphalt roads in order to reduce the time spent on these roads and hence to prevent slowing down other road users.

Some solutions currently adopted to increase maximum tractor speed consist in providing the transmission with gears designed to achieve the desired velocity ratios, which obviously increases the production cost and overall size of the transmission.

Other solutions concentrate directly on the bevel pinion/ring gear velocity ratio. This, however, results in an increase in all the speeds supplied by the transmission, which, in most cases, is unacceptable.

Still other known solutions consist in a transmission comprising two subsystems: a first subsystem for achieving a given speed range, and a second subsystem for achieving higher speeds up to a maximum of 50 km/h. The outcome, however, is a highly complex transmission.

Moreover, full market coverage would mean producing and marketing tractor models with maximum 40 km/h transmissions, and others with 50 km/h transmissions, thus greatly increasing storage costs.

US-A-4.961.721, discloses a device transmitting power to the rear power take-off (PTO) of the tractor according to the preamble of claim 1.

Although this solution does not require high-cost alterations to existing transmissions, it nevertheless needs a redesign of the PTO drive train, considering that an additional clutch has to be provided inbetween the engine and the PTO output. This solution moreover has the disadvantage that the PTO only can be engaged when the high velocity ratio is selected.

It is therefore an object of the present invention to provide a vehicle, in particular a tractor, designed to eliminate the aforementioned drawbacks.

According to the present invention, a vehicle is provided comprising a frame, an engine, a transmission with clutches and operable to select a number of vehicle speeds, and a device for transmitting power from said engine to a PTO; said device including a high speed mechanism which is capable of selecting a higher vehicle speed which is greater than any of said number of vehicle speeds selectable by said transmission; the connection of said high speed mechanism causing said transmission clutches to automatically disengage, but involving no other change in said transmission in order to select said higher vehicle speed; and said high speed mechanism including first and second gears having a velocity ratio corresponding to said higher vehicle speed.

The vehicle is characterized in that said first gear rests idly on a shaft forming part of said high speed mechanism when said higher vehicle speed is not selected and is made integral with said shaft when said higher vehicle speed is selected.

A number of non-limiting embodiments of the present invention will now be described by way of example with reference to the accompanying drawings, in which:
Figure 1 shows an overall view of a first embodiment of the present invention;
Figure 2 shows a larger-scale detail of Figure 1; and
Figure 3 shows a larger-scale detail of a second embodiment according to the present invention.

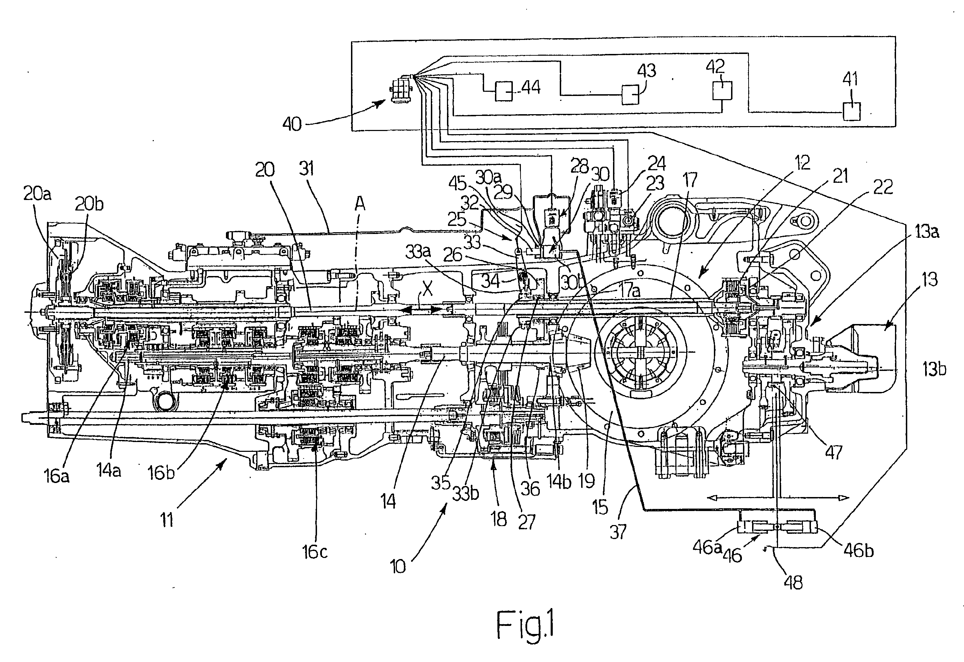

Reference number 10 in Figure 1 indicates as a whole a unit for transmitting power to the drive wheels and rear power take-off (PTO) of an agricultural tractor, which is shown only partly. Unit 10 can be divided theoretically into a standard transmission 11, and a device 12 for transmitting power from an engine (not shown) via a rear power take-off (PTC) 13 comprising a series of gears 13a and a countershaft 13b towards an implement (not shown).

Power is transmitted from the engine to an intermediate shaft 14 by conventional transmission means described briefly below. More particularly, by means of three groups 16a, 16b, 16c of gears provided with respective clutches, power is transmitted from the engine to a ring gear 15 which, in turn, rotatably drives two rear drive wheels (not shown) of the tractor. The three groups 16a, 16b, 16c of gears form the standard transmission 11.

The Figure 1 embodiment shows a so-called "Full Power Shift" transmission of which the operating principle is well known in the art and which, in the present case, supplies the tractor with eighteen forward speeds and six reverse speeds. Transmission 11 as a whole operates in a known manner and is therefore not described in detail.

As shown in Figure 1, unit 10 further comprises a clutch 18 which, when activated by the operator, transmits power to the front wheels (not shown) to operate the tractor in "four-wheel-drive".

Intermediate shaft 14 has two ends 14a, 14b, of which end 14b is fitted with a bevel pinion 19 meshing permanently with ring gear 15 which, as stated, directly powers the rear wheels (not shown) of the tractor. Power is actually transmitted from the engine to intermediate shaft 14 through a shaft 20, which forms part of device 12 and provides for transmitting power to the rear PTO 13. Shaft 20 has a longitudinal axis of symmetry A, and is provided with a flywheel 20a with an associated flexible coupling 20b.

A clutch 21 and brake 22, controlled by respective solenoid valves 23 and 24 as described in detail further on, are located between shaft 20 and PTO 13, and are operable, among other things (see below), to connect and disconnect PTO 13 to and from shaft 20 under control of the operator.

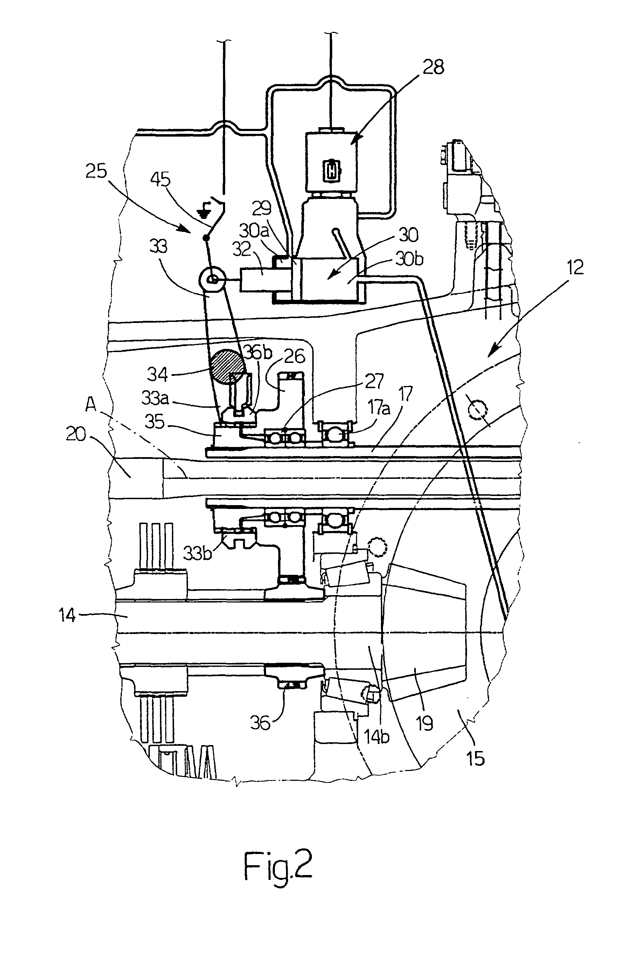

As best seen in Figure 2, shaft 20 moreover is provided with a device 25 for connecting a gear 26 integrally to shaft 20, as described in detail later on.

For the above purpose, shaft 20 is housed inside a sleeve 17 coaxial with axis A of shaft 20. The sleeve 17 is supported by the tractor frame by means of a ball bearing 17a and is connected to clutch 21 of PTO 13.

Gear 26 is in actual fact fitted idly to sleeve 17 by means of a ball bearing 27. Sleeve 17 extends between clutch 21 at one end, and an integral hub 35 at the other end.

Device 25 comprises a solenoid valve 28 for controlling the position of a piston 29 forming part of a hydraulic cylinder 30 supplied with oil under pressure by a utility line 31, e.g. at 17-18 bar pressure.

Piston 29 is connected to a rod 32 which acts on a lever 33 rotating about a fixed pin 34. One end of lever 33 is hinged in a particular way (see below) to an internally toothed sleeve 33b, the teeth of which (not shown) mesh with grooves (not shown) on gear 26 to connect gear 26 integrally to sleeve 33b, and therefore to shaft 20, by means of hub 35, sleeve 17 and clutch 21.

Sleeve 33b must obviously be so connected to lever 33 as to enable sleeve 33b to rotate in unison with gear 26 with no interference from lever 33, which, as stated, can only rotate about pin 34 when activated by rod 32. For the above reason, the bottom end 33a of lever 33 is provided with a fork (not shown) having pads (not shown) which engage in a known manner a circular groove (not shown) formed on the outer surface of sleeve 33b.

Consequently, when clutch 21 is engaged, rotation of shaft 20 produces a corresponding rotation of sleeve 17 and integral hub 35. And, when the teeth (not shown) on sleeve 33b are inserted by lever 33 inside and astride the seats on the outer surface of hub 35 and on gear 26, gear 26 is made integral with shaft 20. In other words, the two-way movement of toothed sleeve 33b in a direction X defined by the longitudinal axis of symmetry A of shaft 20 provides, at the operator's discretion, for making gear 26 integral or idle with respect to shaft 20.

When gear 26 is made integral with shaft 20 as described above, i.e. when toothed sleeve 33b is connected to the gear 26 and to the hub 35, rotation of shaft 20 is transmitted to a gear 36 integral with shaft 14. In this manner, power is transmitted to bevel pinion 19 and from there onwards to ring gear 15 to engage a nineteenth forward gear corresponding to maximum tractor speed, e.g. 50 km/h. At the same time, obviously to avoid ratio interference, the clutches of the three groups 16a, 16b, 16c of gears of the standard transmission 11 are all disengaged.

All operations are performed and controlled by means of an electronic central control unit 40 controlled by the operator, as will be seen, by means of a series of switches.

Central control unit 40 is connected electronically to a series of switches 41, 42, 44 and a push-button control 43, the function of which is described later on in connection with the operation of unit 10.

The other devices forming part of unit 10 will now be described with reference to the operation they are performing.

The first operating mode is a so-called "PTO mode". In this mode, the operator can select one of the eighteen forward speeds or one of the six reverse speeds in the usual way using standard transmission 11, and at the same time use PTO 13 by means of device 12. To do so, switch 41, for selecting "PTO mode" or a "full speed mode" (see below), is set by the operator to "PTO mode".

As a starting condition, the tractor is stationary but with the engine running. Solenoid valve 28 is set to "OFF", so that only chamber 30a of cylinder 30 is supplied with pressurized oil over line 31.

Lever 33 rotates clockwise, so that sleeve 33b is disconnected from gear 26, which, supported on bearing 27, rests idly on sleeve 17. Chamber 30b of cylinder 30, being drained of oil, allows piston 29 to move freely rightwards with reference to Figure 2.

A switch 45 supplies electronic central control unit 40 with the information necessary to determine the position of sleeve 33b.

A double hydraulic cylinder 46 of PTO 13, shown in Figure 1, is not subjected to any hydraulic stress, so that, by means of a manual control 47, the ratio of PTO 13 can be set, for example, at either 540 or at 1000 rpm. The selected ratio is transmitted to central control unit 40 by a switch 48.

If switch 42 for activating PTO 13 has not yet been pressed by the operator, solenoid valve 23 for engaging and releasing clutch 21 remains in the "OFF" position so that the clutch 21 is released, while solenoid valve 24 for engaging and releasing brake 22 of PTO 13 remains in the "ON" position so that brake 22 is engaged.

At this point, the operator, using switch 42, can switch solenoid valve 23 to the "ON" condition and solenoid valve 24 to the "OFF" condition to engage clutch 21 and simultaneously release brake 22, so that power is transmitted by device 12 from the engine to PTO 13. In other words, PTO 13 is selectively activated or deactivated by means of switch 42, which acts on solenoid valves 23, 24 following operator selection of "PTO mode" or "full speed mode" by means of switch 41.

In some applications, a switch 44 in addition is provided to enable the operator to disable brake 22 even when clutch 21 is released. This is especially useful when a rotating implement with a high inertial mass is attached to PTO 13, as in this case, engaging brake 22 with rotating masses attached to shaft 13b of PTO 13 could result in wear of brake 22.

As stated, in "PTO mode", the operator can select from eighteen forward and six reverse tractor speeds using standard transmission 11, and at the same time may or may not operate PTO 13 by means of switch 42. Gearshifting is obviously performed by means of push-button control 43.

To select "full speed mode", the operator again simply uses switch 41. This is also done with the vehicle stationary and the engine running. Under this condition the central control unit 40 switches solenoid valve 28 to "ON" to also feed pressurized oil to chamber 30b of hydraulic cylinder 30. In other words, activating solenoid valve 28 also supplies chamber 30b of cylinder 30 with pressurized oil, which, coming from the same line 31, is at the same pressure as the oil fed to chamber 30a. Since, however, the face of piston 29 on the chamber 30b side has a greater surface area than the face on the chamber 30a side, which is partly occupied by rod 32, the difference in pressure on the two faces moves rod 32 leftwards, with reference to Figure 2, to rotate lever 33 anticlockwise about pin 34.

Rotation of lever 33 moves sleeve 33b rightwards in direction X to connect gear 26 to hub 35. That is, gear 26 is made integral, as described previously, with shaft 20 to transmit power from shaft 20 to bevel pinion 19, and therefrom to ring gear 15, to shift into maximum vehicle speed which, as stated, may be 50 km/h. This nineteenth gear is again engaged by the operator using push-button control 43.

Otherwise said, shaft 20, which is normally only used to transmit power to PTO 13, is now used by the operator to shift the vehicle wheels into nineteenth gear using push-button shift control 43, which acts depending on activation or de-activation of solenoid valve 23 and clutch 21. Also under this condition switch 45 supplies central control unit 40 with the necessary information to determine the position of sleeve 33b in direction X.

A pressurized-oil feed line 37 is provided between solenoid valve 28 and double cylinder 46. Double cylinder 46, having the same pressure on both sides 46a, 46b by solenoid valve 28 being set to "ON", centers shift control 47 into neutral, which is detected by switch 48. Solenoid valve 23 will be set to "ON", so that clutch 21 will be engaged when the nineteenth gear is selected, while solenoid valve 24 is set to "OFF", i.e. brake 22 is released.

It should be pointed out that there should be no positive retention of the manual shift control 47 setting, to enable double cylinder 46 to be centered into neutral when, as seen, switching from "PTO mode" to "full speed mode".

In "full speed mode", since clutch 21 is engaged and brake 22 released, not only sleeve 17 but also gears 13a of PTO 13 will be rotated. However, since double cylinder 46 is set to neutral and the operator cannot select a speed for driving shaft 13b of PTO 13 using shift control 47, shaft 13b does not rotate.

In "full speed mode", therefore, the rotating parts are shaft 20, clutch 21, sleeve 17, hub 35, sleeve 33b, gear 26 meshing with gear 36, and gears 13a of PTO 13. Shaft 13b of PTO 13 however is not driven.

As already mentioned, in "full speed mode", the clutches of transmission 11 must all be released by means not shown in the accompanying drawings.

Also as already mentioned, the maximum speed of e.g. 50 km/h, is again selected by the operator using push-button control 43.

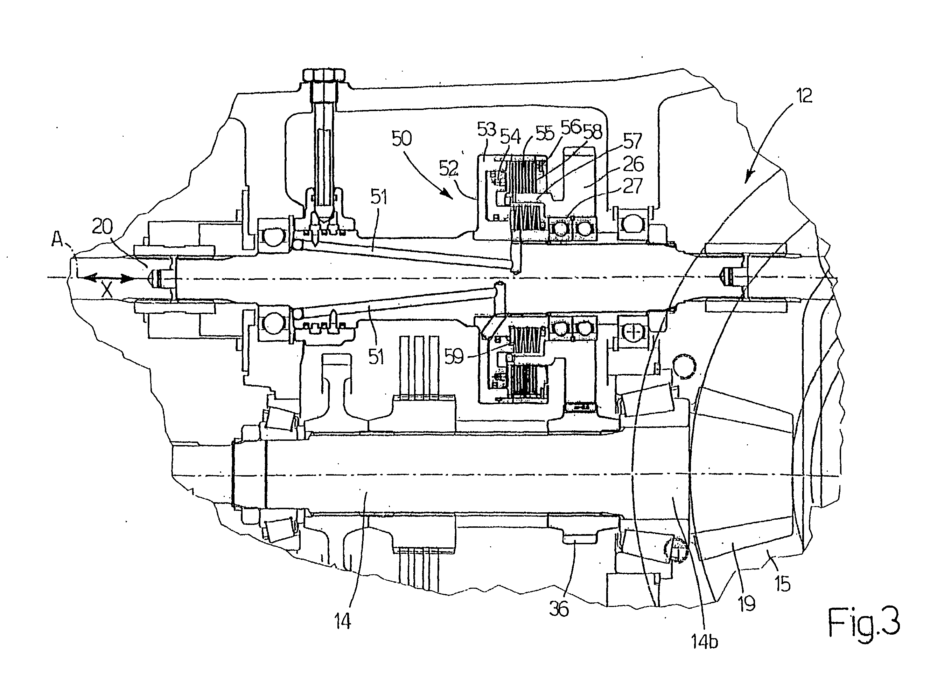

Figure 3 shows a second embodiment of the present invention. In this embodiment, device 25 is replaced by a device 50 for making gear 26 selectively integral with shaft 20. Although device 50 operates on a different principle, it nevertheless has exactly the same effect on gear 26 as device 25 described with reference to Figures 1 and 2.

Device 50 comprises two pressurized-oil feed channels 51 formed in shaft 20 which serve to feed oil to a bell shaped housing 52 integral with shaft 20 and coaxial with axis A. The housing 52 has an inner chamber 53 and houses a piston 54. Chamber 53 is fed with pressurized oil along channels 51 to move piston 54 rightwards, with reference to Figure 3, in direction X. Piston 54 is connected by known means to a cylindrical member 55 from which a pack of annular plates 56 project inwardly and perpendicularly to axis A of shaft 20.

In the Figure 3 embodiment, gear 26 has a hub 57, from which outwardly project annular plates 58 alternating with plates 56, which, as already mentioned, are integral with cylindrical member 55, in turn integral with piston 54.

Piston 54 is stressed elastically by a spring 59, coaxial with axis A, which tends to restore piston 54 to its original position.

In the second embodiment shown in Figure 3, switch 41 of the first embodiment of Figures 1 and 2 is dispensed with, since no mode selection is required.

In actual use, when push-button control 43 is activated by the operator, central control unit 40 commands pressurized-oil feed to chamber 53 via channels 51 and a solenoid valve (not shown). The oil entering chamber 53 moves piston 54 and integral cylindrical member 55 rightwards, with reference to Figure 3, so that each plate 56 is also moved rightwards into contact with the surface of an adjacent plate 58 integral with hub 57. If, therefore, during rotation, plates 56 do not slide with respect to plates 58, gear 26 acts as if it were unitary with shaft 20, as opposed to being idly fitted thereto.

Consequently, if gear 26 is no longer idle with respect to shaft 20, power can be transmitted from shaft 20 to gear 36 to rotate bevel pinion 19 meshing permanently with ring gear 15 of the tractor wheels. In this case, too, the velocity ratio between gear 26 and gear 36 is obviously such as to achieve the desired maximum speed of the rear wheels of the tractor.

In the second embodiment, too, the clutches of standard transmission 11 are obviously released when shifting into nineteenth gear.

The main advantage of unit 10 of the tractor according to the present invention lies in the possibility of shifting to a fairly high speed (e.g. 50 km/h) using shaft 20 of the PTO power transmission device 12.

Using the same standard transmission 11, therefore, end users may choose between a version with no device 25 or 50, and a possibly more expensive version designed for a maximum speed of 50 km/h, with no alterations to transmission 11, which may remain standard for all models.

Moreover, since the clutches of transmission 11 are released when shifting into nineteenth gear, i.e. in "full speed mode", power dispersion of transmission 11 in this mode is considerably reduced.

Though the invention is illustrated with reference to a so-called "Full Power Shift" transmission, all the teachings referred to above may obviously also be applied to other transmission systems, such as a so-called "High/Low" or "Semi-Power Shift" transmission.

## Claims

1. A vehicle comprising a frame, an engine, a transmission (11) with clutches and operable to select a number of vehicle speeds, and a device (12) for transmitting power from said engine to a PTO (13); said device (12) including a high speed mechanism (25; 50) which is capable of selecting a higher vehicle speed which is greater than any of said number of vehicle speeds selectable by said transmission; the connection of said high speed mechanism causing said transmission clutches to automatically disengage, but involving no other change in said transmission in order to select said higher vehicle speed; and said high speed mechanism including first and second gears (26, 36) having a velocity ratio corresponding to said higher vehicle speed; and
**characterized in that** said first gear (26) rests idly on a shaft (17; 20) forming part of said high speed mechanism (25; 50) when said higher vehicle speed is not selected and is made integral with said shaft (17; 20) when said higher vehicle speed is selected.

2. A vehicle according to claim 1, **characterized in that** it further comprises switch means (41) for switching from a "PTO mode", wherein a shaft (13b) of said PTO (13) is rotated, to a "high speed mode", wherein instead of said shaft (13b) said two gears (26, 36) are rotated.

3. A vehicle according to claim 2, **characterized in that** said PTO (13) comprises a manual shift control (47) enabling the operator to select the rotational speed of the shaft (13b) of the PTO (13) and hydraulic cylinder means (46) associated with said manual shift control (47), the arrangement being such that upon switching the switch means (41) to the "high speed mode", said hydraulic cylinder means (46) are set to a neutral position in which said shaft (13b) of said PTO (13) is no longer driven.

4. A vehicle according to any of the preceding claims, **characterized in that** said high speed mechanism (25) comprise a toothed sleeve coupling (33b) for selectively connecting said gear (26) integrally to a hub (35), which itself is integral with a sleeve (17); said sleeve (17) forming part of said device (12).

5. A vehicle according to claim 4, **characterized in that** said toothed sleeve coupling (33b) is moved selectively by a lever (33) hinged to a pin (34); said lever (33) being activated by a rod (32) of a solenoid valve (28).

6. A vehicle according to claim 4 or 5, **characterized in that** said gear (26) is in permanent mesh with said other gear (36) fixedly attached to an output shaft (14) of said transmission (11).

7. A vehicle according to claim 1, **characterized in that** said high speed mechanism (50) comprises a plate coupling (52, 54, 56, 58) for integrally connecting said device (12) to said gear (26); said gear (26) being in permanent mesh with said other gear (36) fixedly attached to an output shaft (14) of said transmission (11).

8. A vehicle according to any of the preceding claims, **characterized in that** said transmission (11) is a "Full Power Shift" or a "High/Low" or a "Semi-Power Shift" transmission.

9. A vehicle according to any of the preceding claims, **characterized in that** all operations are controlled by an electronic central control unit (40).

## Patentansprüche

1. Fahrzeug mit einem Rahmen, einem Motor, einem Getriebe (11) mit Kupplungen, das betreibbar ist, um eine Anzahl von Fahrzeug-Gängen auszuwählen, und mit einer Vorrichtung (12) zur Übertragung von Leistung von dem Motor zu einer PTO- (Zapfwellen-) Einrichtung (13), wobei die Vorrichtung (12) einen Hochgeschwindigkeits-Mechanismus (25; 50) einschließt, der in der Lage ist, eine höhere Fahrzeug-Geschwindigkeit auszuwählen, die größer als irgendeine der Anzahl von Fahrzeug-Geschwindigkeiten, die durch das Getriebe auswählbar ist, wobei die Verbindung des Hochgeschwindigkeits-Mechanismus ein automatisches Auskuppeln der Getriebe-Kupplungen hervorruft, jedoch keine weitere Änderung des Getriebes zur Auswahl der höheren Fahrzeug-Geschwindigkeit bedingt, und wobei der Hochgeschwindigkeits-Mechanismus erste und zweite Zahnräder (26, 36) einschließt, die ein Geschwindigkeits-Verhältnis aufweisen, das der höheren Fahrzeug-Geschwindigkeit entspricht; und
**dadurch gekennzeichnet, dass** das erste Zahnrad (26) freilaufend auf einer einen Teil des Hochgeschwindigkeits-Mechanismus (25; 50) bildenden Welle (17; 20) angeordnet ist, wenn die höhere Fahrzeug-Geschwindigkeit nicht ausgewählt ist, und einstückig mit der Welle (17; 20) verbunden ist, wenn die höhere Fahrzeug-Geschwindigkeit ausgewählt ist.

2. Fahrzeug nach Anspruch 1, **dadurch gekennzeichnet, dass** es weiterhin Schalter-Einrichtungen (41) zum Schalten von einer "Zapfwellen-Betriebsart", in der eine Welle (13b) der Zapfwellen-Einrichtung (13) gedreht wird, auf eine "Hochgeschwindigkeits-Betriebsart" umfasst, in der anstelle der Welle (13b) die zwei Zahnräder (26, 36) in Drehung versetzt werden.

3. Fahrzeug nach Anspruch 2, **dadurch gekennzeichnet, dass** die Zapfwellen-Einrichtung (13) eine manuelle Schalt-Steuerung (47), die es dem Fahrer ermöglicht, die Drehgeschwindigkeit der Welle (13b) der Zapfwellen-Einrichtung (13) auszuwählen, und Hydraulikzylinder-Einrichtungen (46) umfasst, die der manuellen Steuerung (47) zugeordnet sind, wobei die Anordnung derart ist, dass beim Schalten der Schalter-Einrichtungen (41) auf die "Hochgeschwindigkeits-Betriebsart" die Hydraulikzylinder-Einrichtungen (46) auf eine neutrale Stellung eingestellt werden, in der die Welle (13b) der Zapfwellen-Einrichtung (13) nicht mehr länger angetrieben wird.

4. Fahrzeug nach einem der vorhergehenden Ansprüche, **dadurch gekennzeichnet, dass** der Hochgeschwindigkeits-Mechanismus (25) eine verzahnte Hülsenkupplung (33b) zum selektiven Verbinden des Zahnrades (26) einstückig mit einer Nabe 35 umfasst, die ihrerseits einstückig mit einer Hülse (17) ausgebildet ist, wobei die Hülse (17) einen Teil der Vorrichtung (12) bildet.

5. Fahrzeug nach Anspruch 4, **dadurch gekennzeichnet, dass** die verzahnte Hülsenkupplung (33b) selektiv durch einen Hebel (33) bewegt wird, der gelenkig an einem Bolzen (34) befestigt ist, wobei der Hebel (33) durch eine Stange (32) eines Magnetspulen-Ventils (28) aktiviert wird.

6. Fahrzeug nach Anspruch 4 oder 5, **dadurch gekennzeichnet, dass** das Zahnrad (26) dauernd mit dem anderen Zahnrad (36) kämmt, das fest an einer Ausgangswelle (14) des Getriebes (11) angebracht ist.

7. Fahrzeug nach Anspruch 1, **dadurch gekennzeichnet, dass** der Hochgeschwindigkeits-Mechanismus (50) eine Plattenkupplung (52, 54, 56, 58) zur einstückigen Verbindung der Vorrichtung (12) mit dem Zahnrad (26) umfasst, wobei das Zahnrad (26) dauernd mit dem anderen Zahnrad (36) kämmt, das fest an einer Ausgangswelle (14) des Getriebes (11) angebracht ist.

8. Fahrzeug nach einem der vorhergehenden Ansprüche, **dadurch gekennzeichnet, dass** das Getriebe (11) ein "Voll-Lastschalt"- oder ein "Hoch/Niedrig"- oder ein "Teillast-Schalt"- Getriebe ist.

9. Fahrzeug nach einem der vorhergehenden Ansprüche, **dadurch gekennzeichnet, dass** alle Operationen durch eine elektronische zentrale Steuereinheit (40) gesteuert werden.

## Revendications

1. Véhicule comprenant un châssis, un moteur, une transmission (11) qui s'embraye et peut fonctionner de manière à sélectionner plusieurs vitesses de véhicule, ainsi qu'un dispositif (12) pour la transmission de la puissance dudit moteur à une PDF (13); ledit dispositif (12) comprenant un mécanisme à grande vitesse (25; 50) qui est capable de sélectionner une vitesse de véhicule supérieure à toutes lesdites vitesses de véhicule sélectionnables par ladite transmission; la connexion dudit mécanisme de vitesse élevée entraînant les embrayages de la transmission à se dégager automatiquement mais n'impliquant aucune autre modification à ladite transmission de manière à sélectionner ladite vitesse de véhicule supérieure; ledit mécanisme de vitesse comprenant des premier et deuxième mécanismes (26, 36) ayant un rapport de vitesse correspondant à ladite vitesse de véhicule supérieure; et
**caractérisé en ce que** ledit premier mécanisme (26) repose librement sur un arbre (17; 20) faisant partie dudit mécanisme de vitesse élevée (25; 50) lorsque ladite vitesse supérieure de véhicule n'est pas sélectionnée et devient partie intégrante dudit arbre (17; 20) lorsque ladite vitesse supérieure de véhicule est sélectionnée.

2. Véhicule selon la revendication 1, **caractérisé en ce que** il comprend également des moyens de commutation (41) pour passer d'un "mode PDF" dans lequel un arbre (13b) de ladite PDF (13) tourne, à un "mode grande vitesse" dans lequel deux mécanismes (26, 36) tournent au lieu dudit arbre (13b).

3. Véhicule selon la revendication 2, **caractérisé en ce que** ladite PDF (13) comprend une commande de changement manuel (47) permettant à l'opérateur de sélectionner la vitesse de rotation de l'arbre (13b) de la PDF (13) et des moyens de cylindre hydrauliques (46) associés à ladite commande de vitesse manuelle (47), l'agencement étant conçu de manière telle que lors de la commutation des moyens de commutation (41) dans le "mode grande vitesse", lesdits moyens de cylindre hydrauliques (46) sont réglés sur une position neutre dans laquelle l'arbre (13b) de ladite PDF (13) n'est plus commandé.

4. Véhicule selon l'une quelconque des revendications précédentes, **caractérisé en ce que** ledit mécanisme à grande vitesse (25) comprend un accouplement à manchon denté (33b) pour la connexion sélective dudit mécanisme (26) de manière intégrale à un moyeu (35) lequel fait lui-même partie intégrante d'un manchon (17), ledit manchon (17) faisant partie dudit dispositif (12).

5. Véhicule selon la revendication 4, **caractérisé en ce que** ledit accouplement à manchon denté (33) est déplacé sélectivement par un levier (33) articulé sur une broche (34); ledit levier (33) étant actionné par la tige (32) d'une électrovanne (28).

6. Véhicule selon la revendication 4 ou 5, **caractérisé en ce que** ledit mécanisme (26) est en engrènement permanent avec ledit autre mécanisme (36) monté de manière fixe sur un arbre de sortie (14) de ladite transmission (11).

7. Véhicule selon la revendication 1, **caractérisé en ce que** ledit mécanisme à grande vitesse (50) comprend un accouplement de tôles (52, 54, 56, 58) pour relier intégralement ledit dispositif (12) audit mécanisme (26); ledit mécanisme (26) étant en engrènement permanent avec ledit autre mécanisme (36) monté fixement sur un arbre de sortie (14) de ladite transmission (11).

8. Véhicule selon l'une quelconque des revendications précédentes, **caractérisé en ce que** ladite transmission (11) est une transmission "intégrale" ou "haut/ bas" ou "à puissance intermédiaire".

9. Véhicule selon l'une quelconque des revendications précédentes, **caractérisé en ce que** toutes les opérations sont commandées par une unité de commande électronique centrale (40).
